Europäisches Patentamt

European Patent Office

Office européen des brevets

(19)

(11) Veröffentlichungsnummer: **0 602 520 A2**

# (12) EUROPÄISCHE PATENTANMELDUNG

(21) Anmeldenummer: **93119779.2**

(22) Anmeldetag: **08.12.93**

(51) Int. Cl.5: **H04L 27/00**

(30) Priorität: **18.12.92 DE 4242908**

(43) Veröffentlichungstag der Anmeldung:
**22.06.94 Patentblatt 94/25**

(84) Benannte Vertragsstaaten:
**DE FR GB**

(71) Anmelder: **Deutsche Aerospace AG**

**D-81663 München(DE)**

(72) Erfinder: **Feyh, German, Dr.**
**Auweg 18**
**D-89233 Neu-Ulm/Reutti(DE)**
Erfinder: **Kückenwaitz, Martin**
**Oechslinstrasse 6**
**D-73312 Geislingen(DE)**

(74) Vertreter: **Fröhling, Werner Otto, Dr.**
**Deutsche Aerospace AG**
**Patentabteilung**
**Sedanstrasse 10**
**D-89077 Ulm (DE)**

(54) **Verfahren zur Erkennung der Modulationsarten A3E, J3E und F3E und Anordnung zum Durchführen des Verfahrens.**

(57) Um das Vorliegen eines A3E- oder J3E- oder F3E-modulierten Nachrichtensignals erkennen zu können, wird nach der Erfindung vorgeschlagen, daß jeweils eine Gesamt- und eine Kurzzeit-Autokorrelationsfunktion des komplexen Basisbandsignals $x$ bzw. des Betrags $|\dot{x}|$ des zeitlich differenzierten Basisbandsignals $\dot{x}$ gebildet werden, daß diese Gesamt- und Kurzzeit-Autokorrelationsfunktionen jeweils von gleicher niederer Ordnung sind und jeweils der Parameterschätzung eines autoregressiven Modells von gleicher niederer Ordnung unterworfen werden, daß der aus der Parameterschätzung der Gesamt- bzw. Kurzzeit-Autokorrelationsfunktion abgeleitete Gesamt-bzw. Kurzzeit-Prädiktionsfehler $\alpha_G(x)$, $\alpha_G(|\dot{x}|)$ bzw. $\alpha_K(x)$, $\alpha_K(|\dot{x}|)$ normiert werden, daß eine vorgebene Funktion $f(\alpha_G(x))$ bzw. $f(\alpha_G(|\dot{x}|))$ des jeweiligen normierten Gesamt-Prädiktionsfehlers $\alpha_G(x)$ bzw. $\alpha_G(|\dot{x}|)$ als Schwellenwert mit dem jeweils zugehörigen Kurzzeit-Prädiktionsfehler $\alpha_K(x)$ bzw. $\alpha_K(|\dot{x}|)$ verglichen wird, daß bei Erfüllung der Bedingung $\alpha_K(x) \leq f(\alpha_G(x))$ auf das Vorliegen eines J3E- modulierten Basisbandsignals $x$ oder auf das Vorliegen eines Seitenbandes eines A3E-modulierten Basisbandsignals $x$ geschlossen wird bzw. bei Erfüllung der Bedingung $\alpha_K(|\dot{x}|) \leq f(\alpha_G(|\dot{x}|))$ auf das Vorliegen eines nach der Modulationsart F3E frequenz- oder phasenmodulierten Basisbandsignals $x$ geschlossen wird.

EP 0 602 520 A2

Die Erfindung betrifft ein Verfahren zur Erkennung der Modulationsarten A3E, J3E und F3E gemäß Oberbegriff des Patentanspruchs 1 sowie eine Anordnung zum Ausführen des Verfahrens.

Ein solches Verfahren bzw. eine solche Anordnung sind aus der DE 41 02 412 A1 bereits bekannt.

Zur Übertragung werden Nachrichtensignale entsprechend einer Modulationsart umgeformt. Um zu erkennen, daß Nachrichtensignale gemäß einer bestimmten Modulationsart gesendet werden, oder um Nachrichtensignale ihrer Modulationsart entsprechend richtig zu demodulieren, ist es notwendig, die Modulationsart solcher Signale zu erkennen.

Die Modulationsartenerkennung baut dabei zumeist auf einer versuchten Demodulation auf. Gelingt der Versuch der Demodulation, so wird auf die Demodulationsart erkannt, ansonsten das Signal als nicht klassifizierbar zurückgewiesen.

Bei dem aus der DE 34 03 187 A1 bekannten Verfahren wird ein nach einer bestimmten, anfangs noch unbekannten Modulationsart moduliertes komplexes Basisbandsignal x in mehrere voneinander unabhängige Zwischensignale transformiert, und zwar wird eine nichtlineare Transformation des Real- und Imaginärteils des komplexen Basisbandsignals x durchgeführt, um den Betrag und die Phase des Signals berechnen zu können. Die so gewonnenen Zwischensignale bilden die Grundlage für die Bestimmung der Modulationsart in einer nachgeschalteten Auswerteschaltung.

Die Berechnung des Betrags und der Phase aus dem komplexen Basisbandsignal x ist in der Regel sehr rechenintensiv. Es existieren nur iterative Algorithmen. Diese besitzen entweder lineare Konvergenz (wie z.B. der für den in dem Artikel von T.C. Chen: "Automatic Computation of Exponentials, Logarithms, Ratios and Square Roots", in "IBM J. Res. Develop.", Vol. 16, No. 4, July 1972, S. 380 bis 388 beschriebenen COordinate-Rotation-DIgital-Computer (CORDIC) verwendete Algorithmus) und benötigen deshalb mindestens ebensoviele Rechenschritte wie die Genauigkeit des Ergebnisses sein soll oder quadratische Konvergenz mit der Unterstützung von Tabellen, die abgelegt werden müssen.

Außerdem verstärkt die nichtlineare Transformation von Real- und Imaginärteil des komplexen Basisbandsignals x in Betrag und Phase das Rauschen. Schwankt die Amplitude des Nutzsignals, so wird bei kleinen Amplitudenwerten das Rauschen im Gesamtsignal überwiegen und entsprechend die Phase bestimmen. In der Phasenauswertung werden dann vollkommen falsche Phasen mit Phasen hoher Güte gleich gewichtet. So kommt es bei niedrigem Signal-zu-Rausch-Verhältnissen (SNR) eher zu falschen Ergebnissen.

Das aus der DE 41 02 412 A1 bekannte Verfahren sieht vor, daß die einzelnen Zwischensignale bzw. das komplexe Basisbandsignal x selbst jeweils einer Parameterschätzung mindestens eines autoregressiven Modells unterworfen werden und daß aus den geschätzten Parametern bzw. aus von diesen Parametern abgeleiteten Prädiktionsfehlern $\alpha$ durch Vergleich mindestens einiger dieser Parameter oder Prädiktionsfehler $\alpha$ untereinander bzw. mit vorgegebenen Schwellenwerten die Modulationsart bestimmt wird. Autoregressive Modelle an sich sind beispielsweise aus der digitalen Spektralanalyse bereits bekannt (vgl. z.B Kap. 7 in dem Lehrbuch "Digital Spectral Analysis" von S.L. Marple Jr., Seiten 189 bis 203 (Prentice-Hall, Englewood Cliffs, New Jersey, 1987.

Das Verfahren kann zwar vom Prinzip her zur Bestimmung beliebiger Modulationsarten eingesetzt werden, also auch zur Bestimmung von analogen oder digitalen Modulationsarten, jedoch ist die Zuverlässigkeit dieses Verfahrens bei den analogen Modulationsarten A3E (Zweiseitenband Amplitudenmodulation), J3E (Einseitenband Amplitudenmodulation mit unterdrücktem Träger) und F3E (Frequenzmodulation mit oder ohne Preemphase und einschließlich Phasenmodulation) deutlich geringer als bei den digitalen Modulationsarten wie z.B. ASK (Amplitude-Shift-Keying), FSK (Frequency-Shift-Keying), MSK (Minimum-Shift-Keying) und PSK (Phase-Shift-Keying).

Die Aufgabe der Erfindung besteht daher darin, zum einen dieses bekannte Verfahren zur Modulationsartenerkennung dahingehend zu verbessern, daß auch bei A3E-, J3E- oder F3E-modulierten Nachrichtensignalen die Modulationsart mit einer möglichst hoher Zuverlässigkeit bestimmt werden kann, und zum anderen eine Anordnung zum Durchführen des Verfahrens anzugeben, mit der möglichst effektiv eine solche Modulationsartenerkennung durchgeführt werden kann.

Die erfindungsgemäße Lösung dieser Aufgabe ist in bezug auf das zu schaffende Verfahren durch die kennzeichnenden Merkmale des Patentanspruchs 1 wiedergegeben und in bezug auf die zu schaffende Anordnung durch die kennzeichnenden Merkmale des Patentanspruchs 12. Die Ansprüche 2 bis 11 enthalten vorteilhafte Aus- und Weiterbildungen des erfindungsgemäßen Verfahrens.

Das aus der DE 41 02 412 A1 bereits bekannte Verfahren wird nach der Erfindung in bezug auf die Erkennung der Modulationsarten A3E, J3E bzw. F3E dahingehend verbessert,

- daß als Zwischensignale jeweils eine Gesamt- und eine Kurzzeit-Autokorrelationsfunktion des Basisbandsignals x und/oder des Betrags $|\dot{x}|$ der ersten zeitlichen Ableitung $\dot{x}$ des Basisbandsignals x gebildet werden,

- daß die Gesamt- und die Kurzzeit-Autokorrelationsfunktion(en) des Basisbandsignals x und/oder des Betrags $|\dot{x}|$ der ersten zeitlichen Ableitung $\dot{x}$ des Basisbandsignals x jeweils von gleicher niederer Ordnung, vorzugsweise von zweiter, dritter, vierter, fünfter oder sechster Ordnung sind und jeweils der Parameterschätzung eines autoregressiven Modells von gleicher niederer Ordnung unterworfen werden,
- daß der aus der Parameterschätzung der (jeweiligen) Gesamt-Autokorrelationsfunktion abgeleitete Gesamt-Prädiktionsfehler $\alpha_G(x)$ bzw. $\alpha_G(|\dot{x}|)$ und der aus der Parameterschätzung der (jeweiligen) Kurzzeit-Autokorrelationsfunktion abgeleitete Kurzzeit-Prädiktionsfehler $\alpha_K(x)$ bzw. $\alpha_K(|\dot{x}|)$ am Ausgang des (jeweiligen) autoregressiven Modells jeweils mit dessen Eingangsleistung normiert werden,
- daß eine vorgebene Funktion $f(\alpha_G(x))$ bzw. $f(\alpha_G(|\dot{x}|))$ des (jeweiligen) normierten Gesamt-Prädiktionsfehlers $\alpha_G(x)$ bzw. $\alpha_G(|\dot{x}|)$ (jeweils) als Schwellenwert mit dem (jeweils zugehörigen) Kurzzeit-Prädiktionsfehler $\alpha_K(x)$ bzw. $\alpha_K(|\dot{x}|)$ verglichen wird,
- daß bei Erfüllung der Bedingung $\alpha_K(x) \leq f(\alpha_G(x))$ auf das Vorliegen eines nach der Modulationsart J3E modulierten Basisbandsignals x oder auf das Vorliegen eines Seitenbandes eines nach der Modulationsart A3E modulierten Basisbandsignals x geschlossen wird bzw. bei Erfüllung der Bedingung $\alpha_K(|\dot{x}|) \leq f(\alpha_G(|\dot{x}|))$ auf das Vorliegen eines nach der Modulationsart F3E frequenz-oder phasenmodulierten Basisbandsignals x geschlossen wird.

Mit dieser Maßnahme wird die Zuverlässigkeit bei der Erkennung der Modulationsarten A3E oder J3E oder F3E (einschließlich Phasenmodulation bzw. mit oder ohne Preemphase) deutlich erhöht.

Mit einer vorteilhaften ersten Weiterbildung des erfindungsgemäßen Verfahrens, bei dem der Verfahrensablauf zur Modulationsartenkennung n-mal wiederholt wird und nur bei l-maliger Erfüllung der (jeweiligen) Bedingung $\alpha_K(x) \leq f(\alpha_G(x))$ bzw. $\alpha_K(|\dot{x}|) \leq f(\alpha_G(|\dot{x}|))$ das Vorliegen der entsprechenden Modulationsart angenommen wird mit $1 \leq l \leq n$, kann die Zuverlässigkeit bei der Erkennung dieser Modulationsarten noch weiter erhöht werden.

Besonders vorteilhaft ist es, wenn die in den einzelnen n Verfahrensabläufen den Berechnungen zugrundegelegte(n) Gesamt-Autokorrelationsfunktion(en) des Basisbandsignals x und/oder des Betrags $|\dot{x}|$ der ersten zeitlichen Ableitung $\dot{x}$ des Basisbandsignals x sich zusammensetzt (sich jeweils zusammensetzen) aus m der n in diesen n Verfahrensabläufen gebildeten zugehörigen Kurzzeit-Autokorrelationsfunktionen mit $1 \leq$ m $\leq$ n, weil auf diese Art und Weise die Gesamt-Autokorrelationsfunktion schnell und einfach, d.h. ohne großen rechentechnischen Aufwand gebildet werden kann.

In einer anderen vorteilhaften Weiterbildung des erfindungsgemäßen Verfahrens ist insbesondere zur zusätzlichen Unterscheidung zwischen A3E-modulierten Signalen einerseits und J3E- bzw. F3E-modulierten Signalen andererseits vorgesehen, daß zusätzlich die Phasen $\phi_k$ der (jeweiligen) Gesamt- und/oder Kurzzeit-Autokorrelationsfunktion des Basisbandsignals x mit mindestens einer linear ansteigenden Folge $k_j$ korreliert werden mit $j \geq 1$, daß der (die) sich daraus ergebende(n) Korrelationskoeffizient(en) mit einem vorgegebenen weiteren Schwellenwert verglichen wird (werden) und daß bei (r-maligem) Überschreiten dieses weiteren Schwellenwertes auf das Vorliegen eines nach der Modulationsart A3E modulierten Basisbandsignals x geschlossen wird (mit $1 \leq r \leq n$).

Zweckmäßigerweise sollten die einzelnen Folgen $k_j$ dabei so gewählt werden, daß bei mehreren linear ansteigenden Folgen $k_j$ (j $\geq$ 2) die Steigungen der diesen Folgen zugrunde Geraden ebenfalls eine linear ansteigende weitere Folge bilden.

Im folgenden wird die Erfindung anhand von Ausführungsbeispielen näher erläutert.

Um die Modulationsart A3E mit hoher Zuverlässigkeit erkennen zu können, wird in einem ersten Ausführungsbeispiel der Korrelationskoeffizient zwischen den Phasen $\phi_k$ der (komplexen) Autokorrelationsfunktion des Basisbandsignals x und einer (oder mehreren) linear ansteigenden Folge(n) berechnet. Überschreitet dieser Koeffizient den oben bereits erwähnten (vorgegebenen) weiteren Schwellenwert, so ist dies ein Indiz dafür, daß ein A3E-moduliertes Signal vorliegt. Diese Klassifikation beruht auf der Erkenntnis, daß das A3E-modulierte Signal als Zweiseitenbandsignal ein frequenzgeträgertes relles Signal ist, das (ohne Trägerung) eine rein reelle Autokorrelationsfunktion besitzen würde. Durch die Trägerung wird diese Autokorrelationsfunktion komplex und wird durch Gleichung

$$r_k = |r_k| \, e^{j\phi k}$$

beschrieben.

Die Phasen $\phi_k$ dieser komplexen Funktion steigen linear mit ihrem Index an:

$$\phi_k = \omega k$$

mit k = 0, 1, 2...

Korreliert nun die Phase der Autokorrelationsfunktion des untersuchten Basisbandsignals x mit einer linear ansteigenden (Referenz-)Folge $k_j$ (j $\geq$ 1), so zeigt ein absolut hoher Korrelationskoeffizient das Vorliegen einer linear ansteigenden Phase und damit das Vorliegen eines reellen geträgerten Nachrichtensignals an (also eines A3E-modulierten Nachrichtensignals), während ein absolut niedriger Korrelationskoeffizient darauf hindeutet, daß keine linear ansteigende Phase vorliegt bzw. daß ein komplexwertiges Signal vorliegt, das sich nicht als ein reelles geträgertes Signal deuten läßt.

Die Genauigkeit dieses Verfahrens kann durch wiederholte Anwendung erhöht werden. Hierbei muß bei n Wiederholungen der jeweilige Korrelationskoeffizient r-mal den vorgegebenen weiteren Schwellenwert übersteigen, wenn auf das Vorliegen eines A3E-modulierten Signals geschlossen werden soll, mit $1 \leq r \leq n$.

Zur Klassifikation der Modulationsart J3E und zur Unterscheidung der getrennten Klassifikation der beiden bei der Modulationsart A3E auftretenden Seitenbänder wird in einem zweiten Ausführungsbeispiel die Gesamt- und die Kurzzeit-Autokorrelationsfunktion des Basisbandsignals x gebildet, wobei die beiden Funktionen von gleicher niederer Ordnung vorzugsweise aus dem Bereich 2 bis 6 sind.

Aus diesen beiden Korrelationsfunktionen werden ein autoregressives Modell gleicher Ordnung berechnet und der sich aus dieser Berechnung jeweils ergebende Prädiktionsfehler $\tilde{\alpha}_G(x)$ (Gesamt-Prädiktionsfehler) bzw. $\tilde{\alpha}_K(x)$ (Kurzzeit-Prädiktions-fehler) am Ausgang des Modells mit der Eingangsleistung dieses Modells normiert. Eine vorgegebene Funktion $f(\tilde{\alpha}_G(x))$ des Gesamt-Prädiktionsfehlers $\tilde{\alpha}_G(x)$ bildet dabei einen Schwellenwert, der mit dem Kurzzeit-Prädiktionsfehler $\tilde{\alpha}_K(x)$ verglichen wird.

Unterschreitet $\tilde{\alpha}_K(x)$ diesen Schwellenwert, ist also die Ungleichung

$$\tilde{\alpha}_K(x) \leq f(\tilde{\alpha}_G(x))$$

erfüllt , wird auf das Vorliegen eines nach der Modulationsart J3E modulierten Basisbandsignals x oder auf das Vorliegen eines Seitenbandes eines nach der Modulationsart A3E modulierten Basisbandsignals geschlossen.

Auch hier kann die Genauigkeit des Klassifikations-Verfahrens durch wiederholte Anwendungen erhöht werden, wobei bei n-maliger Wiederholung der Schwellenwert mindestens l-mal unterschritten worden sein muß ($1 \leq l \leq n$), um auf das Vorliegen von J3E bzw. eines A3E-Seitenbandes mit hoher Zuverlässigkeit schließen zu können.

Zur weiteren Unterscheidung zwischen diesen beiden Fällen kann dann z.B. das in dem ersten Ausführungsbeispiel zuvor beschriebene Verfahren eingesetzt werden.

Zur Klassifikation der Modulationsart F3E (mit oder ohne Preemphase; einschließlich der Phasenmodulation) wird in einem dritten Ausführungsbeispiel zunächst das Basisbandsignal x zeitlich differenziert. Anschließend wird der Betrag $|\dot{x}|$ des differenzierten komplexen Basisbandsignals $\dot{x}$ gebildet (das entspricht im wesentlichen einer Frequenzdemodulation). Auf das so "vorbehandelte" Signal setzt man nun das zuvor in dem zweiten Ausführungsbeispiel beschriebene Verfahren an: d.h. es wird wieder die Gesamt- und Kurzzeit-Autokorrelationsfunktion (diesmal aber des Betrags $|\dot{x}|$ des zeitlich differenzierten Basisbandsignals $\dot{x}$) niederer Ordnung (vorzugsweise der Ordnung 2 bis 6) gebildet und aus dieser Funktion wird wieder ein autoregressives Modell gleicher Ordnung berechnet.

Der sich daraus ergebende (und auf die Eingangsleistung des Modells normierte) Kurzzeit-Prädiktionsfehler $\tilde{\alpha}_K(|\dot{x}|)$ wird mit einer vorgegebenen Funktion $f(\tilde{\alpha}_G(|\dot{x}|))$ des (in vergleichbarer Weise normierten) Gesamt-Prädiktionsfehlers $\tilde{\alpha}_G(|\dot{x}|)$ verglichen. Unterschreitet $\tilde{\alpha}_K(|\dot{x}|)$ dabei diesen Schwellenwert, ist also die Ungleichung

$$\tilde{\alpha}_K\left(\left|\dot{x}\right|\right) \leq f\left(\tilde{\alpha}_G\left(\left|\dot{x}\right|\right)\right)$$

erfüllt, wird auf das Vorliegen der Modulationsart F3E geschlossen.

Wie zuvor geschildert, kann auch hier die Zuverlässigkeit des Verfahrens dadurch erhöht werden, daß dieser Vefahrensablauf n-mal wiederholt wird. Um auf das Vorliegen der Modulationsart F3E schließen zu können, muß dabei der Schwellenwert $f(\tilde{\alpha}_G(|\dot{x}|))$ l-mal unterschritten worden sein mit $1 \leq l \leq n$.

Die einzelnen Transformationen können zeitlich hintereinander und/oder vorzugsweise zeitlich parallel durchgeführt werden.

Vorzugsweise arbeiten die verwendeten autoregressiven Modelle auf der Basis von Levinson-oder Schur-Algorithmen (der Levinson-Algorithmus ist beispielsweise in Kap. 7 des o.a. Lehrbuchs von S.L. Marple Jr. beschrieben, der Schur-Algorithmus z.B. in "Journal für reine und angewandte Mathematik", Vol. 147 (1917) Seiten 205 bis 232). Zweckmäßigerweise werden zur schnelleren Berechnung die Prädiktionsfehler $\tilde{\alpha}$ auf Werte $0 \leq \tilde{\alpha} \leq 1$ normiert, wobei $\tilde{\alpha}$ stellvertretend für alle vorkommenden Prädiktionsfehler steht wie z.B. $\tilde{\alpha}_K(x)$, $\tilde{\alpha}_K(|\dot{x}|)$, $\tilde{\alpha}_G(x)$, $\tilde{\alpha}_G(|\dot{x}|)$.

Zur zusätzlichen Erkennung von digitalen Modulationsarten und/oder von harmonischen Signalen bzw. zur Unterscheidung dieser Modulationsarten von den Modulationsarten A3E, J3E und F3E wird in einer besonders vorteilhaften Ausführungsform des erfindungsgemäßen Verfahrens das komplexe Basisbandsignal x zusätzlich direkt der Parameterschätzung eines autoregressiven Modells vorzugsweise erster Ordnung und/oder zweiter Ordnung unterworfen und/oder zunächst in die Zwischensignale $x^2$ und/oder $x^4$ und/oder $|x|^2$ und/oder $(|x|^2-m_{|x|}2)$ und/oder $(|x|^2-m_{|x|}2)^2$ transformiert, wobei $m_{|x|}2$ der arithmetische Mittelwert von $|x|^2$ ist und $|x|^2$ das Betragsquadrat von x. Diese Zwischensignale werden dann jeweils einer Parameterschätzung eines autoregressiven Modells vorzugsweise dritter Ordnung unterworfen.

Vorzugsweise werden dann die aus den einzelnen Parameterschätzungen abgeleiteten und vorzugsweise normierten Prädiktionsfehler $\alpha_{d1}$, $\alpha_{d2}$, $\alpha_s$, $\alpha_f$, $\alpha_c$, $\alpha_m$, $\alpha_t$ in einer Auswerteschaltung, die Teil der Anordnung zum Durchführen des Verfahrens ist, zumindest zum Teil untereinander jeweils paarweise ins Verhältnis gesetzt und diese einzelnen Verhältnisse $\alpha_y/\alpha_z$ (y, z $\epsilon$ {d1, d2, s, f, c, m, t}; y≠z) mit vorgegebenen Schwellenwerten $s_{yz}$ einzeln verglichen, wobei durch Vielfachvergleich der sich aus diesen Einzelvergleichen ergebenden Differenzen $[(\alpha_y/\alpha_z)-S_{yz}]$ die vorliegende Modulationsart bestimmt wird; die Indizes d1, d2, s, f, c, m, t stehen dabei beispielhaft für verschiedene Arten der Parameterschätzung.

Die Erfindung ist nicht auf die beschriebenen Ausführungsbeispiele beschränkt, sondern sinngemäß auf weitere übertragbar.

So ist es z.B. möglich, die geschilderten Ausführungsformen des erfindungsgemäßen Verfahrens miteinander zu kombinieren, um zweifelsfrei zwischen den drei Modulationsarten unterscheiden zu können.

**Patentansprüche**

1. Verfahren zur Erkennung der Modulationsarten A3E, J3E und F3E, bei welchem ein nach einer bestimmten, anfangs noch unbekannten Modulationsart moduliertes komplexes Basisbandsignal x in ein oder mehrere voneinander unabhängige Zwischensignale transformiert wird, welche Zwischensignale die Grundlage für die Bestimmung der Modulationsart in einer Auswerteschaltung bilden, wobei die einzelnen Zwischensignale und/oder das komplexe Basisbandsignal x selbst jeweils einer Paramterschätzung mindestens eines autoregressiven Modells unterworfen werden und wobei aus den geschätzten Parametern und/oder aus von diesen Parametern abgeleiteten Prädiktionsfehlern $\bar{\alpha}$ durch Vergleich mindestens einiger dieser Parameter oder Prädiktionsfehler $\bar{\alpha}$ untereinander und/oder mit vorgegebenen Schwellenwerten auf die Modulationsart geschlossen wird, dadurch gekennzeichnet,

- daß als Zwischensignale jeweils eine Gesamt- und eine Kurzzeit-Autokorrelationsfunktion des Basisbandsignals x und/oder des Betrags $|\dot{x}|$ der ersten zeitlichen Ableitung $\dot{x}$ des Basisbandsignals x gebildet werden;
- daß die Gesamt- und die Kurzzeit-Autokorrelationsfunktion(en) des Basisbandsignals x und/oder des Betrags $|\dot{x}|$ der ersten zeitlichen Ableitung $\dot{x}$ des Basisbandsignals x jeweils von gleicher niederer Ordnung, vorzugsweise von zweiter, dritter, vierter, fünfter oder sechster Ordnung sind und jeweils der Parameterschätzung eines autoregressiven Modells von gleicher niederer Ordnung unterworfen werden;
- daß der aus der Parameterschätzung der (jeweiligen) Gesamt-Autokorrelationsfunktion abgeleitete Gesamt-Prädiktionsfehler $\alpha_G(x)$ bzw. $\alpha_G(|\dot{x}|)$ und der aus der Parameterschätzung der (jeweiligen) Kurzzeit-Autokorrelationsfunktion abgeleitete Kurzzeit-Prädiktionsfehler $\alpha_K(x)$ bzw. $\alpha_K(|\dot{x}|)$ am Ausgang des (jeweiligen) autoregressiven Modells jeweils mit dessen Eingangsleistung normiert werden;
- daß eine vorgegebene Funktion $f(\alpha_G(x))$ bzw. $f(\alpha_G(|\dot{x}|))$ des (jeweiligen) normierten GesamtPrädiktionsfehlers $\alpha_G(x)$ bzw. $\alpha_G(|\dot{x}|)$ (jeweils) als Schwellenwert mit dem (jeweils zugehörigen) Kurzzeit-Prädiktionsfehler $\alpha_K(x)$ bzw. $\alpha_K(|\dot{x}|)$ verglichen wird;
- daß bei Erfüllung der Bedingung $\alpha_K(x) \leq f(\alpha_G(x))$ auf das Vorliegen eines nach der Modulationsart J3E modulierten Basisbandsignals x oder auf das Vorliegen eines Seitenbandes eines nach der Modulationsart A3E modulierten Basisbandsignals x geschlossen wird bzw. bei Erfüllung der Bedingung $\alpha_K(|\dot{x}|) \leq f(\alpha_G(|\dot{x}|))$ auf das Vorliegen eines nach der Modulationsart F3E frequenz- oder phasenmodulierten Basisbandsignals x geschlossen wird.

2. Verfahren nach Anspruch 1, dadurch gekennzeichnet, daß der Verfahrensablauf zur Modulationsartenkennung n-mal wiederholt wird und nur bei l-maliger Erfüllung der (jeweiligen) Bedingung $\alpha_K(x) \leq f(\alpha_G(x))$ bzw. $\alpha_K(|\dot{x}|) \leq f(\alpha_G(|\dot{x}|))$ das Vorliegen der entsprechenden Modulationsart angenommen wird mit $1 \leq l \leq n$.

3. Verfahren nach Anspruch 2, dadurch gekennzeichnet, daß die in den einzelnen n Verfahrensabläufen den Berechnungen zugrundegelegte(n) Gesamt-Autokorrelationsfunktion(en) des Basisbandsignals x und/oder des Betrags $|\dot{x}|$ der ersten zeitlichen Ableitung $\dot{x}$ des Basisbandsignals x sich zusammensetzt (sich jeweils zusammensetzen) aus m der n in diesen n Verfahrensabläufen gebildeten zugehörigen KurzzeitAutokorrelationsfunktionen mit $1 \leq m \leq n$.

4. Verfahren nach Anspruch 3, dadurch gekennzeichnet, daß die Zeitdauer für die Bildung der einzelnen Kurzzeit-Autokorrelationsfunktionen für alle Funktionen gleichlang ist und vorzugsweise im Bereich von etwa 1-100 ms, vorzugsweise im Bereich von etwa 5-50 ms, insbesondere im Bereich von etwa 10-20 ms liegt.

5. Verfahren nach einem der vorhergehenden Ansprüche, dadurch gekennzeichnet, daß zusätzlich die Phasen $\phi_k$ der (jeweiligen) Gesamt- und/oder Kurzzeit-Autokorrelationsfunktion des Basisbandsignals x mit mindestens einer linear ansteigenden Folge $k_j$ korreliert werden mit $j \geq 1$, daß der (die) sich daraus ergebende(n) Korrelationskoeffizient(en) mit einem vorgegebenen weiteren Schwellenwert verglichen wird (werden) und daß bei (r-maligem) Überschreiten dieses weiteren Schwellenwertes auf das Vorliegen eines nach der Modulationsart A3E modulierten Basisbandsignals x geschlossen wird mit $1 \leq r \leq n$.

6. Verfahren nach Anspruch 5, dadurch gekennzeichnet, daß bei mehreren linear ansteigenden Folgen $k_j$ mit $j \geq 2$ die Steigungen der diesen Folgen zugrunde Geraden ebenfalls eine linear ansteigende weitere Folge bilden.

7. Verfahren nach einem der vorhergehenden Ansprüche, dadurch gekennzeichnet, daß die einzelnen Transformationen zeitlich hintereinander und/oder vorzugsweise zeitlich parallel durchgeführt werden.

8. Verfahren nach einem der vorhergehenden Ansprüche, dadurch gekennzeichnet, daß die verwendeten autoregressiven Modelle auf der Basis von Levinson- oder Schur-Algorithmen arbeiten.

9. Verfahren nach einem der vorhergehenden Ansprüche zur zusätzlichen Erkennung von digitalen Modulationsarten, insbesondere von ASK2, FSK2, MSK2, PSK2 und PSK4, und/oder von harmonischen Signalen, dadurch gekennzeichnet, daß das komplexe Basisbandsignal x direkt der Parameterschätzung eines autoregressiven Modells erster Ordnung und/oder zweiter Ordnung unterworfen wird und/oder zunächst in die Zwischensignale $x^2$ und/oder $x^4$ und/oder $|x|^2$ und/oder $(|x|^2 - m_{|x|}2)$ und/oder $(|x|^2 - m_{|x|}2)^2$ transformiert wird mit $m_{|x|}2$ gleich dem arithmetischen Mittelwert des Betragsquadrats $|x|^2$ von x und daß diese Zwischensignale jeweils einer Parameterschätzung eines autoregressiven Modells vorzugsweise dritter Ordnung unterworfen werden.

10. Verfahren nach Anspruch 9, dadurch gekennzeichnet, daß die aus den einzelnen Parameterschätzungen abgeleiteten und vorzugsweise normierten Prädiktionsfehler $\alpha_{d1}, \alpha_{d2}, \alpha_s, \alpha_f, \alpha_c, \alpha_m, \alpha_t$ in der Auswerteschaltung zumindest zum Teil untereinander jeweils paarweise ins Verhältnis gesetzt werden und diese einzelnen Verhältnisse $\alpha_y/\alpha_z$ (y, z $\epsilon$ {d1, d2, s, f, c, m, t}; $y \neq z$) mit vorgegebenen Schwellenwerten $S_{yz}$ einzeln verglichen werden und daß durch Vielfachvergleich der sich aus diesen Einzelvergleichen ergebenden Differenzen $[(\alpha_y/\alpha_z).S_{yz}]$ die vorliegende Modulationsart bestimmt wird.

11. Verfahren nach einem der vorhergehenden Ansprüche, dadurch gekennzeichnet, daß der Schluß auf das Vorliegen einer bestimmten Modulationsart in einem Schwellenvergleicher oder einem Polynomklassifikator oder in einem neuronalen Netzwerk vorgenommen wird und daß der Schwellenvergleicher oder der Polynomklassifikator oder das neuronale Netzwerk über künstliche Intelligenz, vorzugsweise auf der Basis eines Expertensystems oder auf der Basis einer Fuzzy-Logik, verfügt.

12. Anordnung zum Durchführen des Verfahrens, dadurch gekennzeichnet, daß ein Schwellenvergleicher oder Polynomklassifikator oder ein neuronales Netzwerk zur Klassifikation der erkannten Modulationsart vorgesehen ist und daß der Schwellenvergleicher oder Polynomklassifikator oder das neuronale Netzwerk über künstliche Intelligenz, vorzugsweise auf der Basis eines Expertensystems oder auf der Basis einer Fuzzy-Logik, verfügt.